# EUROPÄISCHE PATENTANMELDUNG

(11) **EP 1 659 473 A1**
(43) Veröffentlichungstag der Anmeldung: **24.05.2006**
(21) Anmeldenummer: 04105986.6
(22) Anmeldetag: 22.11.2004
(51) Int. Cl.: G06F 1/00

(54) **Verfahren und Benutzergerät zur Wiedergabe einer Datei**

(71) Anmelder: Swisscom Mobile AG, 3050 Bern (CH)
(72) Erfinder: Ritter, Rudolf, 3052, Zollikofen (CH)
(74) Vertreter: P&TS Patents & Technology Surveys SA

(57) **Zusammenfassung**

Es ist Verfahren und eine Benutzergerät (1) zur Projektion einer Datei durch ein Benutzergerät (1) offenbart. Das Benutzergerät (1) verfügt über eine Wiedergabevorrichtung (1.7), Mittel zur Identifizierung des Benutzergeräts(1) in einem Mobilfunknetz (5) und über biometrische Erfassungsmittel. Der Benutzer authentisiert sich mit den übertragenen biometrischen Daten in einem Fernserver (7) und lädt eine zu projektierenden Datei oder einen Schlüssel zur Entschlüsselung einer Datei vom Fernserver (7) über dasMobilfunknetz (5) in das Benutzergerät (1) herunter. Mit der in das Benutzergerät (1) integrierten Wiedergabevorrichtung (1.7) wird die Datei oder Präsentation wiedergegeben. Die Erfindung bezieht sich auch auf das offenbarte Benutzergerät (1).

## Beschreibung

### Technisches Geb i et

Die Erfindung bezieht sich auf ein Verfahren und ein Benutzergerät zur Wiedergabe einer Datei gemässden unabhängigen Ansprüchen.

### Stand der Technik

Es sind im Stand der Technik verschiedene Geräte und Verfahren bekannt geworden, mit denen Dateien oder andere Daten projiziert werden können. WO-A2-02/05518 offenbart beispielsweise ein Mobiltelefon, mit dem drahtlosempfangene Daten in ihrem Originalformat auf einer externen Oberfläche oder einem externen Bildschirm projiziert werden können. En tragbarer Projektor für Mobilgeräte ist ebenfalls aus den Schriften WO-A-03/019287 oder EP-A2-1 217 499 bekannt. Auch beispielsweise US-A1-2003/0051139 beschreibt einen Projektor oder Beamer, der über ein drahtloses Netzwerk mit einem PCverbunden ist. Zur Scherung wird auf dem Bildschirm desBeamersein Passwort angezeigt, welcheszur Authentisierung der drahtlosen Netzwerkverbindung zwischen dem PCund dem Projektor dient. US-A1-6,623,127 offenbart einen ähnlichen Projektor, ein PDA oder ein Mobiltelefon, mit welchem Bilder, Nachrichten, etc. vergrössert dargestellt werden können. Diese Einrichtung ist im wesentlich für Personen gedacht, die Schwierigkeiten haben, kleingedruckte Meldungen und Schriftzeichen zu erkennen. Es ist an den genannten Ausführungsbeispielen wenig vorteilhaft, dasssie keine besonderen Authentisierungsmassnahmen kennen, die über eine herkömmliche Scherung hinausgehen. Zudem ist fraglich, in welchem Rahmen zu projizierende Dateien von einem weit entfernten Server realisiert werden kann, ohne die Sicherheit zu gefährden. Die Dateien der US-A1-2003/0051139 müssen beispielsweise auf dem PCvorhanden sein, um angezeigt zu werden.

Deshalb schlägt WO-A1- 2004/023208 ein Mobilgerät mit integriertem Projektor vor, in dem Bilddaten von einem Fernserver empfangen und projiziert werden. Jedoch erwähnen diese genannten Ausführungsformen keine speziellen Sicherheitsmassnahmen oder keinen besonderen Datenschutz. Insbesondere vertrauliche Daten können in dieser Form nicht übertragen werden. Zudem wird in dieser Schrift keine personenbezogene Kontrolle durchgeführt, die in einigen Fällen durchaus notwendig sein kann.

### Darstellung der Erfindung

Es ist Aufgabe der vorliegenden Erfindung, ein Verfahren und ein Benutzergerät zu schaffen, mit welchem Dateien, die von einem Fernserver heruntergeladen werden, wiedergegeben oder projiziert werden können, ohne die Datensicherheit zu gefährden. Insbesondere soll eine personenbezogene Identifizierung möglich sein.

Eine andere Aufgabe der vorliegenden Erfindung ist es, nicht mehr verschiedene Geräte für eine Präsentation mitnehmen zu müssen.

Die erfindungsgemässe Aufgabe wird durch ein Verfahren zur Wiedergabe einer Datei durch ein Benutzergerät gemässdem unabhängigen Verfahrenssprache dadurch gelöst, dass
- das Benutzergerät biometrische Daten des Benutzers erfasst,
- das Benutzergerät sich in dem Mobilfunknetz anmeldet,
- die erfassten biometrischen oder daraus abgeleiteter Schlüsseldaten des Benutzers über das Mobilfunknetz an einen Authentisierungsserver übertragen werden,
- der Benutzer sich mit den übertragenen biometrischen oder der daraus abgeleiteten Schlüsseldaten im Authentisierungsserver authentisiert,
- eine Datei oder ein Schlüssel zum Öffnen einer Datei von einem mit dem Authentisierungsserver verbundenen Fernserver in das Benutzergerät heruntergeladen wird und im Falle, dass ein Schlüssel zum Öffnen einer Datei heruntergeladen wurde, eine Datei mit diesem Schlüssel geöffnet wird und
- die Datei mit dem in das Benutzergerät integrierten Projektor wiedergegeben wird.

Die erfindungsgemässe Aufgabe wird auch durch ein Benutzergerät zur Wiedergabe einer Datei gemässdem unabhängigen Vorrichtungsanspruch dadurch gelöst, dassesfolgende Mittel umfasst
- Mittel zur Aufnahme von biometrischen Daten oder Mittel, um sich mit solchen Mitteln zu verbinden;
- Mittel zur Anmeldung des Benutzergerätes in einem Mobilfunknetz und Mittel zum Senden und Empfangen von Dateien über das Mobilfunknetz;
- Mittel zur Wiedergabe der empfangenen Dateien.

Durch daserfindungsgemässe Verfahren und das erfindungsgemässe Benutzergerät braucht ein Benutzer, welcher eine Präsentation vorführen möchte, seine biometrischen Daten (oder daraus abgeleitete Schlüsseldaten) vom Benutzergerät erfassen zu lassen, dieser verbindet sich mit dem Fernserver, der Benutzer wird im Fernserver durch die biometrischen Daten authentisiert und die Präsentation kann problemlosheruntergeladen und vorgeführt werden. Esist auch denkbar, dasssich der Benutzer biometrisch gegenüber dem Mobilfunknetz durch Vergleich mit im Mobilfunknetz oder in dem Identifizierungsmodul gespeicherte biometrischen Daten identifiziert. En im Mobilgerät oder im Identifizierungsmodul abgelegte Benutzeridentifizierung oder - authentisierung, die selbst mit einem Schlüssel signiert sein kann, wird dann an den Fernserver gesendet. Sofern ein solches Benutzergerät, welchesden Projektor/Beamer und die personengebundene Identifikation enthält, am Vortragsort vorhanden ist, braucht der Benutzer vorteilhaft keinerlei Unterlagen mitzunehmen. Sofern der Benutzer selbst über ein solches Gerät verfügt, musser lediglich dieses mitnehmen und kann problemlosseinen Vortrag über ein bestehendesMobilfunknetz herunterladen und vorführen. Die Mitnahme von mehreren Geräten entfällt vorteilhaft. Esist mit dem erfindungsgemässen Verfahren auch möglich, spontan Dateien, die sich auf dem Fernserver befinden, zu präsentieren. Dies könnte zum Beispiel der Fall sein, wenn während einer Diskussion Fragen zu einem bestimmten Thema aufkommen.

Die biometrischen Daten werden vorteilhaft durch einen Sensor aufgenommen, welcher in das Benutzergerät integriert sein kann. Es ist denkbar, dasssich das Benutzergerät über eine drahtlose Schnittstelle mit einem Haptik-Modul, welches den Sensor enthält, verbindet. Solche drahtlosen Schnittstellen sind ausdem Stand der Technik beispielsweise als BlueTooth, DECT, WLAN, etc. allgemein bekannt. Auch deine Kabelverbindung (USB, etc.) mit einem entsprechenden Haptikmodul ist denkbar. Entsprechend einer vorteilhaften Ausführungsform des erfindungsgemässen Verfahrens nimmt dieser Sensor den Fingerabdruck des Benutzers auf. Die Erfassung von biometrischen Daten des Benutzersist auf diese Weise einfach und unkompliziert möglich. Andere Möglichkeiten der Erfassung von biometrischen Daten (Retina-Scanning, Gesichts-, Sprach- oder Handschrifterkennung, etc.) sind im Rahmen der vorliegenden Erfindung möglich. Gleichzeitig kann das Benutzergerät über den Sensor gesteuert werden. Diesist beispielsweise denkbar, in dem das Benutzergerät über ein Schreibgerät (Kugelschreiber, Stift, Füllfederhalter, etc.) ferngesteuert werden, wobei der Sensor in das Schreibgerät integriert ist. Die Bedienung des Benutzergeräts ist so benutzerfreundlich gestaltet. Zusätzlich enthält das Benutzergerät ein Betriebssystem und eine Anwendungssoftware (PowerPoint, etc.), welche durch einen Prozessor ausgeführt wird und die Datei wiedergibt bzw. projiziert.

Esist auch denkbar, dassder Benutzer eine verschlüsselte Datei aus einem Broadcastnetz empfängt oder von einem Server herunterlädt und durch den vom Fernserver empfangenen Schlüssel entschlüsselt, bevor sie wiedergegeben wird. Die heruntergeladene Datei kann Bilder, Audio- oder Videodateien enthalten. Entsprechend einer vorteilhaften Ausführungsform kann jeder Finger einer bestimmten Datei zugeordnet sein. Diesverhindert, dassdie richtige Datei automatisch gefunden werden kann und nicht erst gesucht werden muss.

Die zu projizierende Datei kann ausscherheitsgründen zusätzlich geschützt sein. Durch Digital Right Management (DRM) kann der Zugriff auf eine Datei mit den biometrischen Daten des Benutzers verknüpft sein, d.h. die Wiedergabe, die Verrechnung der Wiedergabe, die Selbstzerstörung der Datei in Abhängigkeit von Zeit und/oder Ort kann davon abhängig gemacht werden. Zusätzlich zu dieser biometrischen Authentisierung kann an einem oder mehreren der genannten Stellen (VPN-Gateway, Authentisierungs- oder Fernserver oder die Datei selbst) die Eingabe eines Passwortes erforderlich sein.

Es kann sich bei dem Gerät um ein Mobiltelefon handeln, welches mit dem genannten Projektor und dem biometrischen Identifizierungsmitteln ausgestattet ist. In einer anderen Ausführungsform wird ein Computer, tragbarer Computer oder Beamer mit einer zusätzlichen PGKarte ausgestattet, um sich mit dem Mobilfunknetz verbinden zu können; die biometrischen Identifizierungsmittel können Teil des Computers sein oder sie werden wiederum über eine drahtlose Schnittstelle mit dem Gerät verbunden.

### Kurze Beschreibung der Fguren

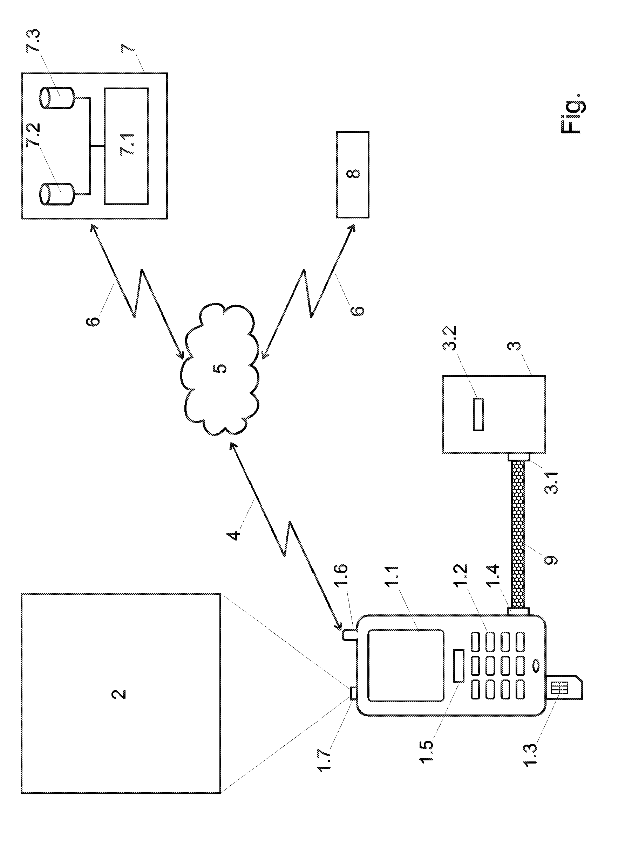

Die Erfindung wird anhand der einzigen Figur näher erläutert, welche ein Telekommunikationssystem darstellt, mit welchem das erfindungsgemässe Verfahren zur Projektion einer Datei durchgeführt werden kann. Eswerden nur die für das Verständnis der Erfindung wichtigen Elemente dargestellt.

### Wege zur Ausführung der Erfindung

Die einzige Figur zeigt ein Telekommunikationssystem, mit welchem das erfi ndungsgemässe Verfahren zur Projektion einer Datei durchgeführt werden kann. En Benutzergerät 1 mit einem Display 1.1 und einer Tastatur 1.2 ist mit einem Identifizierungsmodul 1.3 ausgestattet, um sich über eine Antenne 1.6 in einem Mobilfunknetz 5 zu identifizieren und mit diesem zu verbinden. Zusätzlich ist das Benutzergerät 1 mit einer Wiedergabevorrichtung 1.7 und einem Sensor 1.5 oder anderen Erfassungsmitteln zur Aufnahme von biometrischen Daten des Benutzers ausgestattet. Dasgenannte Mobilfunknetz 5 ist ein herkömmliches Netz wie GSM, GPRS, UMTS oder WLAN. Eskann sich aber auch um ein anderes geeignetes Mobilfunknetz 5 handeln, welchesdieselben Funktionen erfüllt, so zum Beispiel UMA (unlicensed mobil access).

Entsprechend dem erfindungsgemässen Verfahren erfasst das Benutzergerät 1 zunächst die biometrischen Daten des Benutzers. Wie in der einzigen Figur gezeigt, kann diesdurch den Sensor 1.5 geschehen, welcher in das Benutzergerät 1 integriert ist. In der zweiten Ausführungsform deserfindungsgemässen Verfahrensverbindet sich das Benutzergerät 1 über eine drahtlose Schnittstelle 1.4, die im Nahbereich mit einer drahtlosen Übertragung 9 arbeitet, mit einem externen Gerät 3. En solches Haptik-Modul ist ebenfalls mit einer Schnittstelle 3.1, welche im Nahbereich arbeitet, und mit einem Sensor 3.2 oder anderen Erfassungsmitteln zur Aufnahme von biometrischen Daten des Benutzers ausgestattet. Solche Schnittstellen 1.4, 3.1 sind ausdem Stand der Technik beispielsweise als BlueTooth, DECT, ZigBee oder WLAN allgemein bekannt. In einer weiteren Ausführungsform ist das Gerät über eine Kabelverbindung (USB, etc.) mit einem entsprechenden Haptikmodul verbunden. Entsprechend einer vorteilhaften Ausführungsform des erfindungsgemässen Verfahrens nimmt der Sensor 1.5, 3.2 den Fingerabdruck des Benutzers auf. Ein Sensor zur Erfassung eines Fingerabdrucks, welcher im Sinne der vorliegenden Erfindung verwendet werden kann, ist beispielsweise ausder Schrift WO-A2-2003/007218 bekannt. Andere Sensoren, die die gleiche Funktion erfüllen, sind aber in gleicher Weise für die vorliegende Erfindung geeignet. Andere Beispiele für die Aufnahme von biometrischen Daten, die für die vorliegende Erfindung verwendet werden können, sind die Scannung der Netzhaut des Auges (Retina, insbesondere in Verbindung mit einem Virtual Retinal Display zur Wiedergabe der Datei) oder Gesichts-, Handschrift- oder Spracherkennung.

In einem zweiten Schritt meldet sich das Benutzergerät 1 im Mobilfunknetz 5 an. Diesgeschieht durch das Identifizierungsmodul 1.3 (beispielsweise eine SIM-Karte) des Benutzergeräts 1. Der Benutzer möchte nun eine zu projizierende Datei von einem Fernserver 7, der über ein VPN-Gateway erreicht werden kann oder einen anderen IP-Engerät 8 herunterladen. Der Fernserver 7 und das IP-Endgerät 8 können beispielsweise Teil einesfirmeninternen oder einesprivaten LANsoder Teil eines anderen, privaten Netzwerkssein. Die erfassten biometrischen oder daraus abgeleitete Schlüsseldaten des Benutzerswerden dann über eine Verbindung 4, das Mobilfunknetz 5 und eine Verbindung 6 an den Fernserver 7 oder das IP-Endgerät 8 übertragen. Innerhalb eines Fernservers 7 können je nach Ausführungsform und Benutzerwünschen verschiedene Datenbanken 7.1, die Kundendaten 7.2, andere Objektdaten 7.3, etc. enthalten, vorhanden sein.

In einem ersten Schritt wird sich der Benutzer mit der Anrufernummer (CLI Caller-Line-Identification) oder mit anderen in der Identifizierungskarte 1.3 des Benutzergeräts 1 oder in einem Register des Mobilfunknetzbetreibers gespeicherten Daten identifizieren. Mit den übertragenen biometrischen Daten oder den Schlüsseldaten authentisiert sich der Benutzer im nächsten Schritt in einem Authentisierungsserver. Dieser kann Teil eines Firewalls, desgenannten VPN-Gateways, im Fernserver selbst oder von der Datei sein. Zusätzlich zu dieser biometrischen Authentisierung kann an einem oder mehreren der genannten Stellen die Eingabe eines Passworteserforderlich sein. Auch die zu projizierende Datei kann zusätzlich passwortgeschützt oder andersgeschützt sein. Es ist auch denkbar, dasssich der Benutzer biometrisch gegenüber dem Mobilfunknetz durch Vergleich mit im Mobilfunknetz oder in dem Identifizierungsmodul gespeicherte biometrischen Daten identifiziert. En im Mobilgerät oder in der SM-Karte abgelegte Benutzeridentifizierung oder -authentisierung, die selbst mit einem Schlüssel signiert sein kann, wird dann an den Fernserver gesendet. Entsprechend einer vorteilhaften Ausführungsform kann jeder Finger einer bestimmten Datei zugeordnet sein. Diesverhindert, dassdie richtige Datei automatisch gefunden werden kann und nicht erst gesucht werden muss. Durch den richtigen Finger kann man auch einen "direkten Zugriff" nach der Authentisierung auf eine bestimmte Datei haben. Diese Art erlaubt einen sicheren, schnellen Zugriff auf eine Datei, beispielsweise in Stresssituationen, ohne lange nachdenken zu müssen, welche Datei auszuwählen ist. Durch Digital Right Management (DRM) kann der Zugriff auf eine Datei mit den biometrischen Daten des Benutzers verknüpft sein, d.h. die Wiedergabe, die Verrechnung der Wiedergabe, die Selbstzerstörung der Datei in Abhängigkeit von Zeit und/oder Ort kann davon abhängen. Das Herunterladen einer Datei kann von einem Anbieter entsprechend verrechnet werden (Pre-, Postpaid, Abbuchung von einem Benutzerkonto, etc.).

Sobald die Authentisierung und ggf. die weiteren Sicherheitsabfragen (Passwortabfrage, DRM-Rechte, etc.) abgeschlossen sind, wird eine zu projektierenden Datei oder andere Daten, Videos, Audiodateien, Präsentationen etc. vom Fernserver 7 in das Benutzergerät 1 über einen Datenkanal des Mobilfunknet zes 5 heruntergeladen. In einer anderen Ausführungsform wird nicht die Datei selbst vom Fernserver 7 heruntergeladen, sondern lediglich ein Schlüssel, welcher zur Entschlüsselung einer Datei dient. Die eigentliche Datei wird dann ausdem Fernserver 7 oder einem anderen Server, der mit dem Mobilfunknetz verbunden ist, heruntergeladen. Esist auch denkbar, dassder Benutzer eine verschlüsselte Datei auseinem Broadcastnetz empfängt. Eine so empfangene oder heruntergeladene Datei wird in einem zweiten Schritt mit dem ausdem Fernserver 7 heruntergeladenen Schlüssel entschlüsselt. Die Datei wird mit der in das Benutzergerät 1 integrierten Wiedergabevorrichtung 1.7 projiziert bzw. wiedergegeben. Die Wiedergabe ei ner Datei kann sich auch auf die Wiedergabe ei nes Streams beziehen (beispielsweise TV über UMTS).

Das Benutzergerät 1 verfügt über ein eigenes Betriebssystem, einen Prozessor und über eine Anwendungssoftware, welche von dem Prozessor ausgeführt wird, um die Datei auf die externe Leinwand 2 zu projizieren. Die Software kann beispielsweise PowerPoint sein, es sind auch andere Datenwiedergabeprogramme für denselben Zweck denkbar. Der eingebaute Projektor ist ein ausdem Stand der Technik bekannter Mini- oder Mikro-Projektor, ein Virtual Retinal Display (VRD), der die Daten direkt auf die Netzhaut desAugesprojiziert, oder ein Laserprojektor (MEMSProjektor). Auch mehrere angeschlossene VRDsoder mehrere andere Geräte zu privaten oder öffentlichen Gebrauch können verwendet werden. So kann ein Fernsehprogramm für die ganze Familie heruntergeladen werden, während die Familie vor der Leinwand 2 sitzt oder jedes Familienmitglied sein eigenes Wiedergabegerät, sein eigenes Virtual Retinal Display in Form einer Brille, etc. besitzt. Die zu projizierende Datei kann in das Benutzergerät heruntergeladen und dort gespeichert werden. Zu diesem Zweck verfügt das Benutzergerät 1 zusätzlich über ausreichenden Speicherplatz für die empfangene Datei. Eskann die Datei aber auch ohne permanente Speicherung direkt mit dem genannten Projektor wiedergeben (z.B. Streaming-Modus).

Das Benutzergerät 1 kann über die genannte Tastatur 1.2 oder eine angeschlossene Mausbedient werden. In einer vorteilhaften Ausführungsform der Erfindung wird jedoch der Kursor des Benutzergeräts 1 und die Wiedergabevorrichtung 1.7 über die biometrischen Erfassungsmittel bzw. den Sensor 1.5, 3.2 gesteuert, mit dem alle bekannten Funktionen wie Bewegungen, Rotation und Klick durchgeführt werden können. Auf diese Weise kann die Bedienung des Benutzergeräts 1 relativ einfach gestaltet werden. Esist auch denkbar, dassdas Benutzergerät 1 und die integrierte Wiedergabevorrichtung 1.7 über ein Schreibgerät (Kugelschreiber, Stift, Füller, etc.) ferngesteuert werden, in den der Sensor 1.5, 3.2 integriert ist (nicht in der einzigen Figur dargestellt). Die Bedienung des Benutzergeräts kann auf diese Weise benutzerfreundlich gestaltet werden.

Dasgenannte Benutzergerät 1 kann, wie in der einzigen Figur dargestellt, ein Mobilgerät oder ein Mobiltelefon sein, welches über eine integrierte Wiedergabevorrichtung 1.7, ein Identifizierungsmodul 1.3 zur Identifizierung des Benutzergeräts 1 in dem Mobilfunknetz 5 und über biometrische Erfassungsmittel verfügt oder mit solchen biometrischen Erfassungsmitteln über eine drahtlose Schnittstelle 1.4 verbunden ist. Die Daten zur Anmeldung an das Mobilfunknetz 5 sind dann in einer SM-Karte als Identifizierungsmodul 1.3 im Benutzergerät 1 gespeichert. Das Benutzergerät 1 kann ein Computer, tragbarer Computer oder ein Beamer oder ein Projektor sein, welcher zusätzlich mit einer PC-Karte ausgestattet wird, um es mit dem Mobilfunknetz 5 zu verbinden. In heute bereits erhältlichen Computern sind bereits kapazitive haptische Sensoren integriert, die zur Steuerung des Kursorsbzw. des Computers (X-, Y-Bewegung, Rotation, Druck als Klickfunktion) dienen und die gleichzeitig den Fingerabdruck des Benutzers erfassen. Diebiometrischen Identifizierungsmittel in Form eines Haptik-Modulskönnen aber ebenfalls, wie oben dargestellt, über eine genannte drahtlose Schnittstelle 1.4 mit dem Computer, dem tragbaren Computer oder dem Beamer verbunden werden. Solche Schnittstellen sind in der Regel standardmässig in diesen Geräten integriert.

Die vorliegende Erfindung bezieht sich auch auf ein Benutzergerät 1 zur Projektion von Dateien, welches über eine integrierte Wiedergabevorrichtung 1.7, ein Identifizierungsmodul 1.3 zur Identifizierung des Benutzergeräts 1 in einem Mobilfunknetz 5 und biometrische Erfassungsmittel verfügt oder mit solchen biometrischen Erfassungsmitteln über eine drahtlose Schnittstelle 1.4 verbindbar ist. Wie bereitsausgeführt, umfasst das Benutzergerät 1 einen Prozessor, ein Betriebssystem und eine Anwendungssoftware wie beispielsweise PowerPoint, etc., um die Dateien wiedergeben zu können. In einem integrierten Speicher können die Dateien je nach Bedarf vor der Wiedergabe zwischengespeichert werden.

Vorteilhaft braucht ein Benutzer, welcher eine Präsentation vorführen möchte, seine biometrischen Daten vom Benutzergerät 1 erfassen zu lassen, dieser verbindet sich mit dem Fernserver 7, der Benutzer wird im Fernserver 7 durch die biometrischen Daten authentisiert und die Präsentation kann über das Mobilfunknetz 5 problemlos heruntergeladen und vorgeführt werden. Sofern ein solches Benutzergerät 1, welches die Wiedergabevorrichtung 1.7/Beamer und die personengebundene Identifikation enthält, am Vortragsort vorhanden ist, braucht der Benutzer vorteilhaft keinerlei Unterlagen mitzunehmen. Sofern der Benutzer selbst über ein solches Gerät verfügt, musser lediglich dieses mitnehmen und kann problemlosseinen Vortrag über ein bestehendes Mobilfunknetz 5 herunterladen und vorführen. Die Mitnahme von mehreren Geräten (Beamer, Laptop, etc.) entfällt vorteilhaft. Esist mit dem erfindungsgemässen Verfahren auch möglich, spontan Dateien, die sich auf dem Fernserver befinden, zu präsentieren. Dies könnte zum Beispiel der Fall sein, wenn während einer Diskussion Fragen zu einem bestimmten Thema aufkommen.

### Bezugszeichenliste

- 1: Ben utzergerät
- 1.1: Display
- 1.2: Tastatur
- 1.3: Identifizierungsmodul
- 1.4: Drahtlose Schnittstelle
- 1.5: Sensor zur Aufnahme eines Fingerabdrucks
- 1.6: Antenne
- 1.7: Wiedergabevorrichtung
- 2: Leinwand
- 3: ExternesGerät
- 3.1: Drahtlose Schnittstelle
- 3.2: Sensor zur Aufnahme eines Rngerabdrucks
- 4: Verbindung über das Mobilfunknetz 5
- 5: Mobilfunknetz
- 6: Verbindung über das Mobilfunknetz 5
- 7: Fernserver
- 7.1: Datenbank
- 7.2: Kundendaten
- 7.3: Objektdaten
- 8: IP-Endgerät
- 9: Drahtlose Übertragung

## Patentansprüche

1. Verfahren zur Wiedergabe einer Datei durch ein Benutzergerät (1), wobei das Benutzergerät (1) über eine integrierte Wiedergabevorrichtung (1.7), ein Identifizierungsmodul (1.3) zur Identifizierung desBenutzergeräts(1) in einem Mobilfunknetz (5) und biometrische Erfassungsmittel verfügt oder mit solchen biometrischen Erfassungsmitteln über eine drahtlose Schnittstelle (1.4) verbunden ist, und wobei das Verfahren die folgenden Verfahrensschritte umfasst:
- das Benutzergerät (1) erfasst biometrische Daten des Benutzers,
- das Benutzergerät (1) meldet sich in dem Mobilfunknetz (5) an,
- die erfassten biometrischen oder daraus abgeleiteter Schlüsseldaten des Benutzerswerden über das Mobilfunknetz (5) an einen Authentisierungsserver übertragen,
- der Benutzer authentisiert sich mit den übertragenen biometrischen oder der daraus abgeleiteten Schlüsseldaten im Authentisierungsserver,
- eine Datei oder ein Schlüssel zum Öffnen einer Datei wird von einem mit dem Authentisierungsserver verbundenen Fernserver (7) in das Benutzergerät (1) heruntergeladen und im Fall, dassein Schlüssel zum Öffnen einer Datei heruntergeladen wurde, wird eine Datei mit diesem Schlüssel entschlüsselt und
- die Datei wird mit der in das Benutzergerät (1) integrierte Wiedergabevorrichtung (1.7) wiedergegeben.

2. Verfahren nach Anspruch 1, **dadurch gekennzeichnet, dass**das biometrischen Erfassungsmittel ein Sensor (1.5, 3.2) ist, welcher den Fingerabdruck des Benutzers auf nimmt.

3. Verfahren nach Anspruch 1 oder 2, **dadurch gekennzeichnet, dass** das Benutzergerät (1) selbst die biometrischen Daten des Benutzers erfasst.

4. Verfahren nach Anspruch 1 oder 2, **dadurch gekennzeichnet, dass** das Benutzergerät (1) über eine Schnittstelle (1.4) im Nahbereich mit einem externen Gerät (3) verbunden ist, um die biometrischen Daten des Benutzers in dem externen Gerät (3) aufzunehmen.

5. Verfahren nach Anspruch 4, **dadurch gekennzeichnet, dass**das Benutzergerät (1) und die integrierte Wiedergabevorrichtung (1.7) über ein Schreibgerät ferngesteuert werden, in den der Sensor (1.5, 3.2) oder das biometrische Erfassungsmittel integriert ist.

6. Verfahren nach Anspruch 1 bis 5, **dadurch gekennzeichnet, dass**ein Kursor desBenutzergeräts(1) über eine Tastatur des Benutzergeräts (1) oder die biometrischen Erfassungsmittel (1.5, 3.2) gesteuert wird.

7. Verfahren nach einem der Ansprüche 1 bis6, **dadurch gekennzeichnet, dass**das Benutzergerät (1) über das Mobilfunknetz (5) mit einem Fernserver (7), welcher Teil eines LANsoder eines anderen privaten Netzwerksist, verbunden wird und die Datei oder der Schlüssel zum Öffnen der Datei ausdiesem Fernserver (7) heruntergeladen wird.

8. Verfahren nach einem der Ansprüche 1 bis 7, **dadurch gekennzeichnet, dass**die biometrischen Daten zur Gewährleistung von DRM-Rechten, die mit der benannten Datei verbunden sind, verwendet werden.

9. Verfahren nach einem der Ansprüche 1 bis8, **dadurch gekennzeichnet, dass**eine Datei, die mit einem heruntergeladenen Schlüssel geöffnet wird, vom Fernserver (7) oder von einem anderen Server heruntergeladen oder durch ein Broadcastnetz empfangen wird.

10. Verfahren nach einem der Ansprüche 1 bis9, **dadurch gekennzeichnet, dass**der Zugriff auf ein oder mehrere der folgenden Elemente: ein bestehendes Frewall, ein VPN-Gateway, der Authentisierungs- oder Fernserver oder auf die Datei selbst zusätzlich durch ein Passwort geschützt wird.

11. Verfahren nach einem der Ansprüche 1 bis 10, **dadurch gekennzeichnet, dass**die zu projizierende Datei in das Benutzergerät (1) heruntergeladen und dort gespeichert wird.

12. Verfahren nach einem der Ansprüche 1 bis 11, **dadurch gekennzeichnet, dass**die projizierende Datei in das Benutzergerät (1) heruntergeladen und ohne permanente Speicherung direkt mit der genannten Wiedergabevorrichtung (1.7) projiziert wird.

13. Verfahren nach einem der Ansprüche 1 bis 12, **dadurch gekennzeichnet, dass**die Datei mittelseiner Anwendungssoftware, welche im Benutzergerät (1) von einem Prozessor ausgeführt wird, projiziert wird.

14. Verfahren nach einem der Ansprüche 1 bis 13, **dadurch gekennzeichnet, dass**die Datei mit einem oder mehreren Virtual Retinal Display (VRD) oder einem Laserprojektor projiziert wird.

15. Verfahren nach einem der Ansprüche 1 bis 13, **dadurch gekennzeichnet, dass**die Datei mit einem Beamer als integrierten Projektor gegen eine externe Leinwand (2) projiziert wird.

16. Verfahren nach einem der Ansprüche 1 bis 15, **dadurch gekennzeichnet, dass**das Benutzergerät (1) ein Mobilgerät ist und die Daten zur Anmeldung an das Mobilfunknetz (5) in einer Identifizierungskarte, vorzugsweise in einer SIM-Karte, im Benutzergerät (1) gespeichert werden.

17. Verfahren nach einem der Ansprüche 1 bis 15, **dadurch gekennzeichnet, dass**das Benutzergerät (1) mit einer PC-Karte ausgestattet wird, um es mit dem Mobilfunknetz (5) zu verbinden.

18. Verfahren nach einem der Ansprüche 1 bis 17, **dadurch gekennzeichnet, dass**die Datei oder der Schlüssel zum Öffnen der Datei über ein bekanntes Mobilfunknetz wie GSM, GPRS, UMTS, WLAN übertragen werden.

19. Benutzergerät (1) zur Wiedergabe einer Dateien, welches umfasst
- Mittel zur Aufnahme von biometrischen Daten oder Mittel, um sich mit solchen Mitteln zu verbinden;
- Mittel zur Anmeldung des Benutzergerätes in einem Mobilfunknetz (5) und Mittel zum Senden und Empfangen von Dateien über das Mobilfunknetz (5);
- Mittel zur Wiedergabe der empfangenen Dateien.

20. Benutzergerät (1) nach Anspruch 19, **dadurch gekennzeichnet, dass** das Mittel zur Aufnahme der biometrischen Daten ein Sensor (1.5, 3.2) ist, welcher zur Abnahme eines Fngerabdrucksdes Benutzersgeeignet ist.

21. Benutzergerät (1) nach Anspruch 19 oder 20, **dadurch gekennzeichnet, dass** das Mittel zur Aufnahme der biometrischen Daten ein Sensor (1.5, 3.2) ist, welcher ein Engabemittel des Benutzergeräts (1) ist und gleichzeitig zur Abnahme eines Fingerabdrucks des Benutzersgeeignet ist.

22. Benutzergerät (1) nach einem der Ansprüche 19 bis 21, **dadurch gekennzeichnet, dass**das Benutzergerät (1) einen Prozessor, ein Betriebssystem und eine Anwendungssoftware umfasst, um die Dateien projizieren zu können.

23. Benutzergerät (1) nach einem der Ansprüche 19 bis22, **dadurch gekennzeichnet, dass** das Benutzergerät (1) Mittel zum Speichern der empfangenen Datei aufweist.

24. Benutzergerät (1) nach einem der Ansprüche 19 bis23, **dadurch gekennzeichnet, dass**das Benutzergerät (1) ein Mobilgerät ist und die Daten des Benutzers zur Anmeldung an dasMobilfunknetz (5) in einer Identifizierungskarte, vorzugsweise in einer SIM-Karte, im Mobilgerät gespeichert werden.

25. Benutzergerät (1) nach einem der Anspruch 18 bis23, **dadurch gekennzeichnet, dass**das Benutzergerät (1) mit einer PGKarte ausgestattet ist, um esmit dem Mobilfunknetz (5) zu verbinden.
